# EUROPEAN PATENT SPECIFICATION

(11) **EP 4 063 835 B1**
(45) Date of publication and mention of the grant of the patent: **29.05.2024**
(21) Application number: 22163581.6
(22) Date of filing: 22.03.2022
(51) Int. Cl.: G01N 21/64, G01N 15/14, G01J 3/02, G02B 6/26, G01N 21/53, G01N 21/65, G01N 21/03, G01N 21/51, G01J 3/44, G01N 15/00, G01N 15/10

(54) **FIBER ARRANGEMENT FOR ILLUMINATION AND DETECTION**
FASERANORDNUNG ZUR BELEUCHTUNG UND DETEKTION
AGENCEMENT DE FIBRES POUR L'ÉCLAIRAGE ET LA DÉTECTION

(30) Priority: 22.03.2021 EP 21164119
(43) Date of publication of application: 28.09.2022
(73) Proprietor: RISE RESEARCH INSTITUTES OF SWEDEN AB, 501 15 Borås (SE)
(72) Inventor: MARGULIS, WALTER, Rio de Janeiro (BR); PARKER, HELEN, EDINBURGH (GB); LAURELL, FREDRIK, DANDERYD (SE); ETCHEVERRY CABRERA, SEBASTIAN FELIPE, BARCELONA (ES); SENGUPTA, SANGHAMITRA, AMSTERDAM (NL); VASANT, HARISH ACHAR, STOCKHOLM (SE)
(74) Representative: AWA Sweden AB

(56) References cited:
- WO-A1-97/38318
- US-A1- 2001 012 429
- US-A1- 2008 272 311
- US-A1- 2017 355 955
- ETCHEVERRY S. ET AL: "High performance micro-flow cytometer based on optical fibres", SCIENTIFIC REPORTS , vol. 7 17 July 2017 (2017-07-17), page 5628, XP055832664, DOI: 10.1038/s41598-017-05843-7 Retrieved from the Internet: URL:https://www.ncbi.nlm.nih.gov/pmc/artic les/PMC5514097/pdf/41598_2017_Article_5843 .pdf [retrieved on 2021-08-17]

## Description

### Technical area

This invention relates to an optical fiber arrangement comprising an optical fiber for emitting light towards a sample and a transparent tubular capillary for housing the sample, which optical fiber and transparent tubular capillary are preferably at least partly mounted in a tubular sleeve. The arrangement can be used for the delivery and collection of light for the optical analysis or treatment of a sample contained in a transparent housing capillary.

### Background

Optical fibers are used in many fields for the transport of optical data and signals. For example, in optofluidics, fibers may be used to excite chromophore tagged particles flowing in a fluid and to collect the resulting fluorescence emission. For this purpose, fibers offer many benefits. They are inexpensive, flexible, allow for measurement-at-a-distance, and permit highly controlled optical delivery to and from the target site.

When optical fibers are used to analyze or to modify microscopic particles, such as cells or bacteria, the light generally exits the fiber and is coupled onto the sample by lenses or microscope objectives. Likewise, when light from an illuminated particle is to be detected, it is often focused onto a fiber tip by lenses, and subsequently guided to a photodetector by an optical fiber. Although the use of lenses to collimate the light to and from fibers can be efficient, it is disadvantageous in that it is a bulky arrangement that hinders low-cost instrumentation for analysis.

"High performance micro-flow cytometer based on optical fibres" , Etcheverry et al [DOI:10.1038/s41598-017-05843-7] describes a fiber-based arrangement to count flowing cells, in a flow-cytometer. The arrangement is interesting in that it avoids the use of lenses to focus the light from a fiber onto the sample. In order to be able to illuminate the sample from a straight fiber tip, the sample is made to follow a path from an input capillary to an output capillary. These two independent capillaries are not aligned collinearly, and when the particles exit the input capillary, they are exposed to laser light. The construction of the device is complex and it is cumbersome to align all the fibers and capillaries in relation to each other.

US 2017/0355955 A1 discloses a device for selecting eukaryotic cells in a transportation channel, the device comprising a microfluidic transportation channel, an optical fibre positioned close to the microfluidic channel and coupled to a source of electromagnetic radiation, and a further optical fibre also positioned close to the microfluidic channel and optically coupled to a photodetector.

WO 97/38318 discloses a device for counting small carriers. The device comprises a capillary for receiving the carriers and a pair of optical fibers arranged in parallel with the capillary for delivering and receiving measurement light. Reflecting surfaces are provided for deflecting light from the first optical fiber to the capillary and from the capillary to the second optical fiber.

The invention provides a solution to or at least on alleviation of the above mentioned drawbacks of the prior-art.

### Summary of the invention

The present invention solves the problems of the prior art in that it has the features set forth in the appended claims. The arrangement described here avoids the use of lenses and is significantly more compact than the previous arrangements.

According to another aspect, there is provided an optical fiber arrangement (100) comprising
- a transparent capillary (110) configured to be provided with a sample (101), which transparent capillary preferably has a rectangular or circular cross-section (111) which optionally has a diameter which is at most 5 mm and
- at least one illuminating optical fiber (120) configured for guiding optical radiation (10, 2) along a fiber axis within said optical fiber, which illuminating optical fiber is a single mode fiber for one wavelength range and is arranged alongside and adjacent to said transparent capillary (110), and
wherein said illuminating optical fiber (120) comprises an angled surface (121) for redirecting optical radiation (10) propagating along said fiber axis towards said transparent capillary (110) , wherein the surface normal (122) of said angled surface forms an acute angle relative the fiber axis, which acute axis is within the range of 30° to 60°, and most preferred within the range of 40° to 50°, wherein said illuminating optical fiber (120) is configured to illuminate a predetermined portion of said transparent capillary (110), and wherein said optical fiber arrangement further comprises one or more collecting optical fibers (130), each one of said collecting optical fibers being configured for receiving optical radiation from said predetermined portion of said transparent capillary and to redirect said optical radiation received from said predetermined portion of said transparent capillary along a fiber axis of said collecting optical fiber (130), wherein each one of said collecting optical fibers are arranged along side and adjacent to said transparent capillary, wherein each one of said collecting optical fibers comprises an angled surface for redirecting said optical radiation.

In relation to the present invention the fibers and capillaries are normally fabricated according to conventional means used in fiber technology. A preform is melted and drawn in a tower to produce long lengths of fiber, sometimes in kilometer lengths, which can be cut in short sections ranging from a few centimeters to some meters. When the preform has one or several holes, the resultant fiber also has the holes, since the fiber cross-section is a miniature replica of the preform. In relation to this invention fibers and capillaries fabricated in accordance with the above described technology e.g. may be referred to as drawn fibers and drawn capillaries etc.

The length of the transparent capillary is e.g. within the rage of 1 - 15 cm, or at least 0.5 m, or at least 1 m, and significantly longer than its width (e.g. 0.01 - 5 mm, or 0.1 - 2 mm).

The sample can consist of a liquid or gas flowing in the transparent capillary with particles such as cells, bacteria, viruses contained in e.g. oil, other biological material, dust, or other moieties of several microns size or smaller. The illumination or irradiation of the sample and the collection of the light from the sample takes place through one or several optical fibers placed essentially alongside and parallel to the capillary. The invention discloses a miniaturized way of optically analyzing or treating the sample.

Typically, optical fibers have a light guiding core of micrometer dimensions, i.e. within the interval of 1 µm to 200 µm. For example, the light exiting a standard single-mode telecommunications fiber in the near-field extends over a distance of only <10 µm. In close proximity to micrometer-size particles such as cells or bacteria, it can provide irradiation for good spatial resolution measurements without the use of additional focusing optics.

Monitoring optically the passage of particles or cells in a narrow size capillary can for instance be used to count the cells. Likewise, laser light can excite the cells flowing in the capillary to produce a luminescence or a Raman signal for diagnostics. The laser light can also modify the cells for treatment.

According to one exemplifying embodiment the separation distance between the center of the optical fiber and the transparent cavity is within an interval of 10 µm-1 cm, or 30 µm-1 mm or 50µm-300 µm.

According to one exemplifying embodiment, the illuminating optical fiber(s) is(are) configured to illuminate a predetermined portion of transparent capillary. In addition to the one or more illuminating optical fibers, the fiber arrangement further comprises one or more collecting optical fibers, each one of said collecting optical fibers being configured for receiving optical radiation from said predetermined portion of said transparent capillary, and to redirect said optical radiation received from said predetermined portion of said transparent capillary along a fiber axis of said collecting optical fiber, wherein each one of said collecting optical fibers are arranged along side and adjacent to said transparent capillary.

All of said collecting optical fibers comprise an angled surface for redirecting said light. In other words, the angled surface of the collecting optical fiber may be arranged in the same way as discussed in relation to the illuminating optical fiber. In more detail, first the optical radiation leaves the illuminating optical fiber and illuminates/irradiates the sample at said first predetermined portion of said transparent capillary. In response to this illumination and/or irradiation the sample will scatter the optical radiation and/or emit optical radiation, and this scattered and/or emitted optical radiation will reach the collecting optical fiber, be transmitted through the optical fiber in a direction transverse to the fiber axis, and thereafter the optical radiation will be redirected by the collecting optical fiber in a direction along the fiber axis of the collecting optical fiber e.g. towards a photodetector.

According to one exemplifying embodiment, the optical fiber arrangement comprises a housing or tubular sleeve configured for securing or holding said at least one transparent capillary, said at least one illuminating optical fiber and optionally said one or more the collecting optical fiber(s) in a predetermined alignment relative each other. According to one example, said sleeve or housing comprises one channel wherein all of said at least one transparent capillary, said at least one illuminating optical fiber and optionally said one or more the collecting optical fiber(s) are arranged. Alternatively, each one of said at least one transparent capillary, said at least one illuminating optical fiber and optional at least one the collecting optical fiber are arranged in a respective channel in said sleeve or housing. According to this exemplifying embodiment the inside of said sleeve or housing is transparent to said optical radiation.

According to one exemplifying embodiment, the optical fiber arrangement comprises a housing or tubular sleeve and each one of said at least one capillary, said at least one illuminating optical fiber and optionally said at least one collecting optical fiber are attached to a respective portion of an inner wall of said housing or tubular sleeve. Attaching each one of the element to a respective portion of the inner wall of said sleeve or housing is advantageous as it allows the elements to be fixedly arranged in a predetermined alignment relative each other. The respective portion of the inner wall may be a portion of the same or different channels.

According to one example, one or more of the elements (i.e. said at least one optical fiber, said at least one capillary and said optional at least one collecting fiber) are attached to each other or said sleeve or housing by means of an index matching glue.

According to one exemplifying embodiment, the capillary and more than one fiber are mounted in a housing that maintains the capillary and the said fibers in preferred alignment positions.

According to one exemplifying embodiment, said elements, i.e. said at least one optical fiber, said at least one capillary and said optional at least one collecting fiber, are arranged in a housing, which housing is configured to receive and retain an index matching liquid

The purpose of providing the index matching liquid is to replace air with a medium having a higher refractive index, closer or equal to that of the outer surface of the optical fiber and/or the housing for the transparent cavity.

According to one exemplifying embodiment, said at least one optical fiber further comprises a reflective layer provided to said angled surface, which reflective layer preferably comprises a material selected from a group comprising Al, Au, Ti, Ag and combinations of the same.

According to one exemplifying embodiment, said at least one optical fiber further comprises a mirror provided on said angled surface, which mirror is preferably dielectric or metallic and optionally comprises a material selected from a group comprising Al, Au, Ti, Ag and combinations of the same. The mirror is preferably provided on said angled surface by means of deposition.

In one arrangement, the angle of the fiber and the low refractive index beyond the angled surface guarantee total internal reflection. In some cases, for example when the index beyond the angled surface is high or the angle is insufficient, total internal reflection may not occur on the angled surface. It may be found advantageous to mirror the angled surface. In one preferential arrangement, a dielectric mirror may be deposited on the angled surface of the fiber. In another preferred arrangement, the angled surface may be metallized. The mirror may be fabricated with evaporated aluminum, for example.

According to one exemplifying embodiment, each one of said fiber axis, a center axis of said transparent capillary and a surface normal to the center of said angled surface are arranged in the same plane, and wherein said angled surface is configured to redirect said optical radiation towards said center axis of the transparent capillary.

In relation to this invention, the term "the surface normal to the center of said angled surface" refers to the surface normal which intersect the fiber axis at said angled surface.

The purpose of arranging the fiber axis, the center axis of said transparent capillary and the surface normal to the center of said angled surface in the same geometrical plane, is to facilitate for optical radiation emitted transversely from said fiber to reach the center axis of said transparent cavity.

According to one exemplifying embodiment, there the
optical fiber arrangement further comprises an optical radiation emitting device for emitting optical radiation within the wavelength range of UV, NIR and/or visible light, which light source arrangement is optionally configured for coupling optical radiation within a wavelength range of 300 nm-2500 nm or as discussed above in relation to said excitation wavelength into said optical fiber.

According to one exemplifying embodiment, each one of said at least one optical fiber is configured to guide at least one excitation wavelength, and said angled surface is configured to redirect said at least one excitation wavelength towards the sample, and wherein each one of said at least one optical fiber is further configured to receive and transmit optical radiation scattered and/or emitted from the sample towards said angled surface, which angled surface is configured to redirect said scattered and or emitted optical radiation in a direction coinciding with said fiber axis, wherein emitted optical radiation optionally is fluorescence.

Said excitation wavelength is typically in the near UV-visible-NIR spectral range (300 nm-2500 nm), and more e.g. within the 350 nm to 1100 nm range, and e.g. within the 350 nm to 650 nm range. According to one example laser emitting visible light is used as light source, e.g. emitting red, green or blue light.

According to one example, as discussed above, the illuminating optical fiber is a standard single-mode telecommunications fiber; a single mode fiber for one of the telecom windows, i.e. a single mode fiber which is designed to operate as a single mode fiber for wavelengths in at least one of the telecom windows. It is understood that when such an optical fiber is used to transport or guide e.g. visible light such as blue, green or red light, this single-mode fiber will be capable of transporting more than just one mode of this light. Such fibers, fibers that are capable of supporting only a relatively small number of guided modes of a given wavelength are called few-mode fibers. In other words, the same fiber - e.g. a standard single-mode telecommunications fiber - may be a few mode fiber for one wavelength range such as visible light, and a single mode fiber for a different wavelength range, such as the 1300 nm or 1550 nm range. Said illumination optical fiber is e.g. single mode fiber or a few mode fiber with respect to said at least one excitation wavelength.

According to one exemplifying embodiment, the optical fiber arrangement further comprises a photodetector configured for receiving optical radiation scattered and/or emitted from a sample in said capillary, thereafter transmitted through said illuminating and/or collecting optical fiber towards said angled surface, thereafter redirected along said fiber axis by a e.g. surface of said illuminating and/or collecting optical fiber and thereafter emitted from said illuminating and/or collecting optical fiber towards said photodetector.

The purpose of transmitting the light to a photodetector is that it enables an analysis of the emitted/scattered light over time, and thereby of the optical characteristics of the material in the transparent capillary.

According to one exemplifying embodiment, said transparent capillary comprises an inlet and an outlet and wherein said optical fiber arrangement further comprises a flow arrangement comprising an upper sample reservoir in fluid connection with said inlet of said capillary, and a lower sample reservoir in fluid connection with said outlet of said capillary, which fluid connection allows a sample to flow from said upper sample reservoir to said lower sample reservoir via said transparent capillary, wherein said sample optionally comprises self-contained units of material and said capillary is preferably designed so as to allow said self-contained units of material to pass said capillary one after another. According to one example the distance between said inlet and said outlet is at least 0.5 m. Alternatively or additionally, said capillary is continuous, and optionally having the same channel diameter, within a distance of at least 10 mm, or at least 50 mm or at least 1 cm or at least 5 cm or at least 10 cm before and after the point where said illuminating optical fiber is configured to illuminate said sample.

According to one example, the flow of the particles takes place in a single uninterrupted capillary, and at the point of measurement it is the light that is redirected in the arrangement, not the flowing particles.

In relation to this invention the particles that are to be analysed (e.g. cells, bacteria, other biological material, dust, or other moieties) may also be referred to as self-contained units of material.

The purpose of providing an upper and a lower sample reservoir is to enable an analysis of the sample while it flows through the capillary on its way from the upper to the lower sample reservoir. The reservoir may have any shape, e.g. tubular and preferably with a cross-section and/or volume which is larger than the cross-section/volume of said transparent capillary.

The purpose of restricting the particles/self-contained units of material to pass the capillary one after another, e.g. in a line, is that it facilitates for example counting of the particles and differentiating different types of particles from each other as their respective scattered/emitted radiation are not mixed with each other, as they passes the irradiating light in a time separated manner.

According to one example said upper sample reservoir is configured to receive a sample, which sample comprises a medium e.g. a liquid or a gas, and self-contained unit of materials e.g. cells, bacteria, proteins, dust, or other moieties and combinations thereof. The self-contained unit of material may be transported by said medium from the inlet to the outlet of said transparent capillary. This is beneficial when the fiber arrangement is used e.g. for performing flow cytometry and/or antibody detection.

According to one exemplifying embodiment, An optical fiber arrangement according to claim 1 in which the fibers, i.e. total number of illuminating fibers and collecting fibers, are more than one, and wherein the fibers are aligned . Additionally or alternatively, said fibers are provided essentially parallel to the capillary and preferably closely spaced to it. Preferably, at least one of the fibers has the designed function of collecting light back to a photodetector.

According to a second aspect of the invention there is provided, a method comprising the steps of:
- providing an optical fiber arrangement according to said first aspect or one of the embodiments or examples described herein,
- providing a sample in said transparent capillary of said optical fiber arrangement;
- coupling at least one predetermined excitation wavelength into each one of said optical fibers of said optical fiber arrangement;
- redirecting said at least one predetermined excitation wavelength out of said optical fiber, preferably in a direction transverse to the fiber axis of the optical fiber, towards said sample,
- irradiating said sample with said at least one predetermined excitation wavelength,
- receiving at a first one of said at least one optical fiber optical radiation scattered and/or emitted by said sample in response to said irradiation of said sample;
- transmitting a portion of said received optical radiation through said first optical fiber to said angled surface of said first optical fiber, which angled surface redirects a portion of said received optical radiation in a direction along said fiber axis of said first optical fiber by said;
- transmitting a portion of said received optical radiation from said optical fiber to a photodetector.

The signal generated by the illuminated particles, e.g. elastic scattering, fluorescence or Raman scattering is normally emitted in all directions. The light from the sample arriving back at the illuminating core is very small.

Therefore, in order to maximize the light collection from the illuminated particles and to minimize the crosstalk it can be advantageous to use one small core to guide the light from the source to the angled reflecting surface, and use a larger separate core to collect efficiently and transport to the detector the light emitted or scattered by the sample. In one exemplifying arrangement, this larger core can be arranged coaxially with the illuminating core. This double-core configuration is also referred to as double cladding fiber.

The optical fiber is e.g. a single mode fiber, additionally or alternatively the optical fiber has a double-clad structure. According to one example the numerical aperture of the outer core of the dual core fiber can be > 0.25 while the small inner core used for illumination can have numerical aperture 0.13.

In order to minimize even further crosstalk and to increase the collection efficiency and to be able to distinguish light scattered by the particles to the sides or backwards, additional collection fibers can be arranged around the capillary containing the sample. In an exemplifying embodiment, these collection fibers could also be angled or comprise a reflective angled surface.

Alternatively, the tip of the collection fibers could be located at a position such that light emitted by the sample would fall inside the numerical aperture of the collection fibers. Since their function is to collect light from the sample, the core size can be quite large, only slightly smaller than their diameter. For example, for an arrangement where all fibers and capillary have an outer diameter 125 µm, the core size could be 105 µm. The numerical aperture of collection fibers should be preferentially large, e.g., >0.25).

The invention also comprises a preferential way of mounting the fiber(s) and capillary in alignment for proper operation. As disclosed above, the fibers and the capillary are placed parallel and in close proximity to each other. One way to constrain the fibers and capillary in the correct position is to insert them into a housing with an opening of size barely exceeding the size needed to fit the capillary and the fiber or fibers.

### List of figures

FIG. 1 schematically illustrates a fiber arrangement according to the invention.
FIG. 2 shows masking of the fiber.
FIG. 3 shows the location of the cut made to the masked fiber.
FIG. 4 shows the masked fiber after cutting.
FIG. 5 shows the metal deposition (exploded view).
FIG. 6 shows the angled, mirrored fiber after removal of the mask.
FIG. 7a illustrates a sample flow irradiated with optical radiation.
FIG. 7b illustrates a sample flow scattering or emitting optical radiation towards and angled surface of an illuminating optical fiber.
FIG. 8a illustrates a housing or tubular sleeve with five channels.
FIG. 8b illustrates the housing of Fig 8a provided four fibers and one capillary.

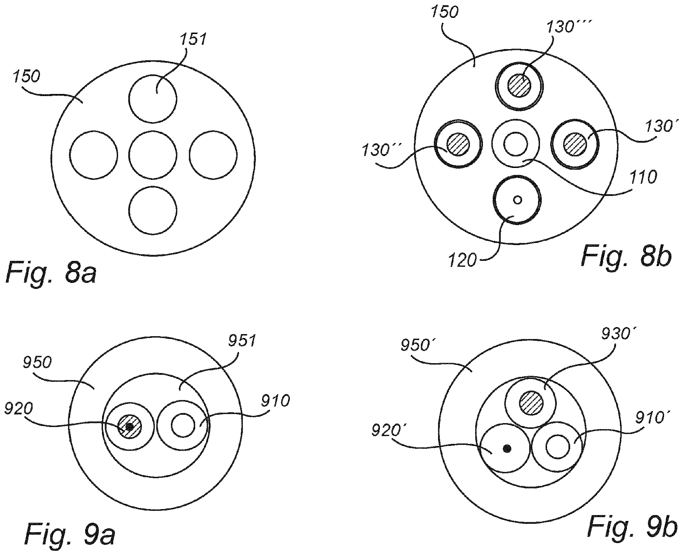

FIG. 8a illustrates a housing with a common channel for an dual core optical fiber and a transparent capillary.
FIG 9a illustrates a housing with a common channel with a dual core illuminating optical fiber and a transparent capillary therein.
FIG 9b illustrates a housing with a common channel with a single mode illuminating optical fiber, a collecting fiber and a transparent capillary therein.

### Detailed description of the invention

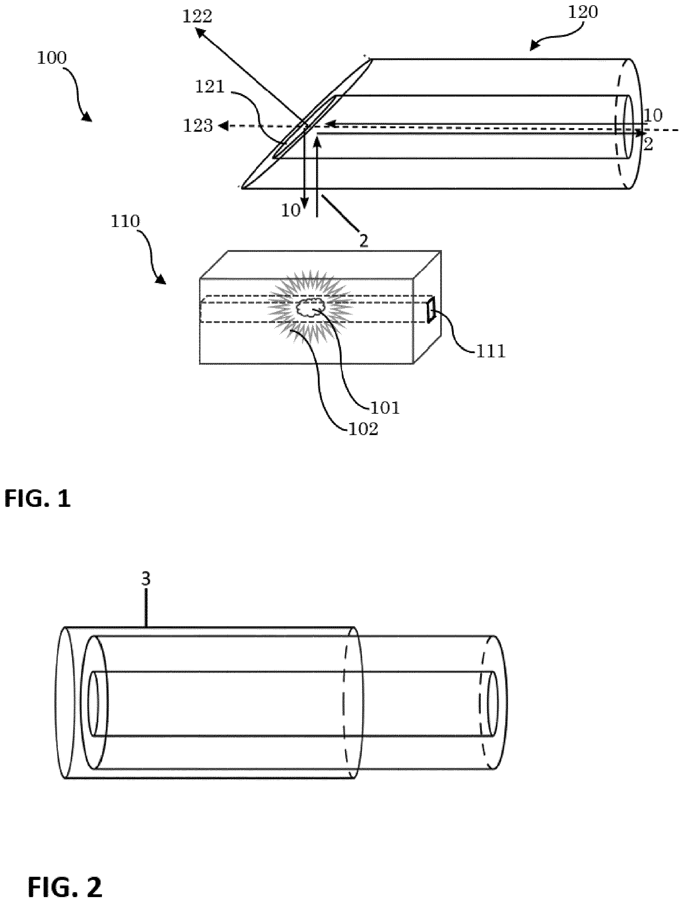

Figure 1 schematically illustrates an aspect of a fiber arrangement according to the invention. In Figure 1 there is shown an optical fiber arrangement 100 comprising a transparent capillary 110 configured to receive a sample 101, which transparent capillary preferably has a rectangular or circular cross-section 111 and optionally a diameter which is at most 5 mm; and one optical fiber 120 configured for guiding optical radiation 10, 2 (e.g, UV, NIR or visible light) along a fiber axis 123 within said optical fiber. The optical fiber is arranged along side and adjacent to said transparent capillary 110, and the optical fiber 120 comprises an angled surface 121 for redirecting the optical radiation 10 propagating along said fiber axis towards said transparent capillary 110, wherein the surface normal 122)of said angled surface forms an acute angle relative the fiber axis, which acute angle is within the range 20° to 70°, preferably within the range of 30° to 60°, and most preferred within the range of 40° to 50° and which acute angle is -45°.

The fiber according to the invention has an angled surface 121 arranged at an acute angle to the fiber axis. In other words, a surface normal 122 of the angled surface intersects the fiber axis 123 by one acute and one obtuse angle. The angled surface may be formed by cleaving and/or polishing a fiber initially having e.g. a vertical end surface. The angled surface could also be provided with a reflective layer and arranged at an angle of -45°. As such, the light propagating from a light source e.g. emitting laser light (not shown) into a first end of the optical fiber and transmitted along the fiber is reflected at the angled surface at the fiber tip at an angle ~90 °relative to the fiber axis itself. Because of the close proximity between fiber and the transparent capillary 111, the optical excitation spot is still small (e.g. micrometer size). Likewise, light emitted from particles in the capillary essentially at a 90° in relation to the capillary's axis and hitting the angled surface of the fiber would be redirected upon reflection and would propagate along the fiber towards a photodetector. In contrast to typical flat-cleaved optical fibers that accept and deliver light along the axis of the fiber, the angled surface allows for fiber optic detection arrangements unencumbered by perpendicular geometries.

The optical radiation emitted from said optical fiber in a direction transverse to the fiber axis irradiates the sample 101, which in turn scatters the incident optical radiation and/or emits optical radiation by means of e.g. fluorescence. At least a portion of the scattered and/or emitted radiation 102 reaches the optical fiber 120, is transmitted through the fiber and reaches the angled surface 121. The angled surface redirects the optical radiation 2 transmitted through the fiber in a direction along the optical axis of the optical fiber. This optical radiation is thereafter emitted at the first end of the optical fiber.

Consequently, the optical fiber 120 may be a single mode optical fiber for radiation within one of the telecom windows, e.g. for 1300 nm or 1550 nm, and the optical radiation emitted from said optical fiber 120 may be visible light.

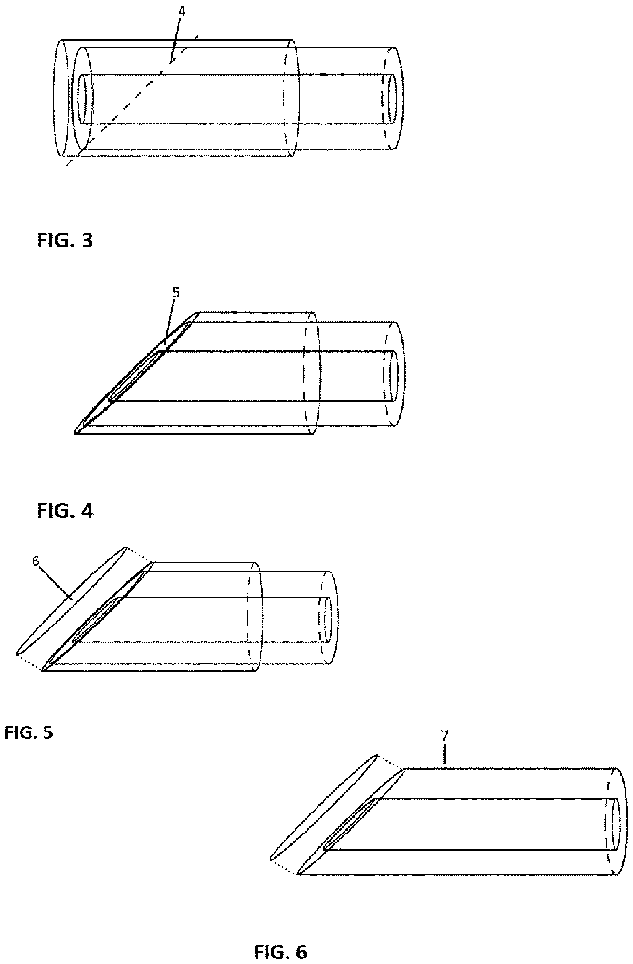

There are various ways of making angled fiber surfaces. For example, several pieces of fiber can be mounted together and polished at the desired angle to produce an optical quality finish to the fiber tips. Direct dicing can also be used. In some cases it may be advantageous to increase the reflectance of the angled surface. A dielectric mirror can be deposited on the fiber surface. Alternatively, a metal coating may be used. For example, the metal could be aluminum, deposited by thermal evaporation or sputtering. As seen in Figures 2-6, the angled mirrored fiber is made by (i) applying a soluble mask to the tip of the fiber (3), (ii) dicing or polishing the tip at a 45 ° angle to the fiber axis (4) and (5) (iii) coating of the angled surface with a thin layer (10 - 200 nm) of aluminum or other such reflective metal via vapor deposition (6) (iv) removal of the mask (7). This process results in the mirroring of the flat angled tip of the fiber, while the external curvature remains free of deposited metal.

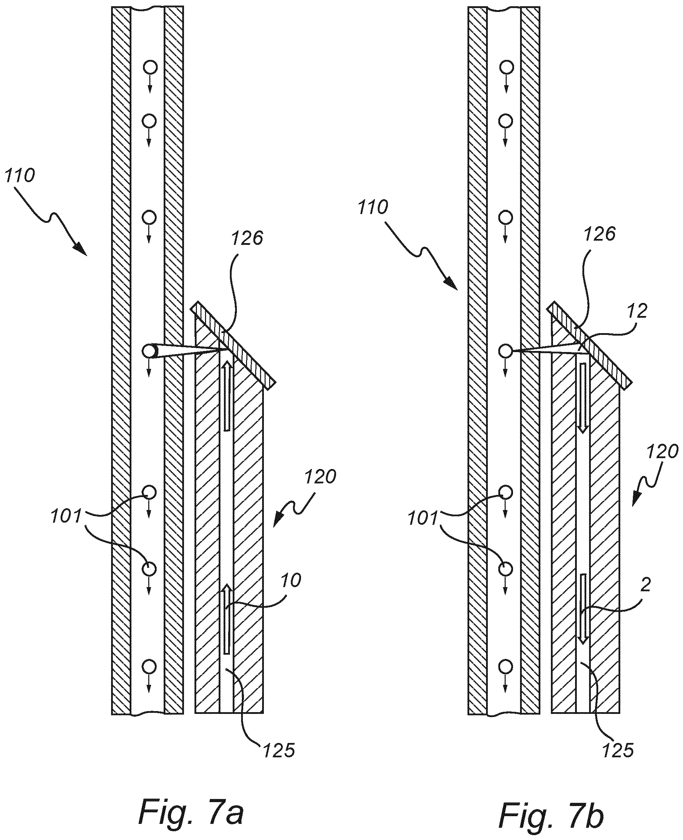

FIG 7a illustrates a flow of particles 101 in a transparent capillary 110 irradiated with optical radiation 10, which optical radiation is redirected by an angled surface 126 of an illuminating optical fiber 120 having a fiber core 125. The capillary being transparent to the optical radiation irradiating the particles.

FIG 7b illustrates the same components as in FIG 7a, and a sample flow 101 scattering and/or emitting optical radiation 12 towards and angled surface, which angled surface redirect the light along the fiber axis, which redirected optical radiation 2 is later emitted from the illuminating optical fiber 120.

Figure 8a illustrates a drawn capillary 159 with five channels 151, before being drawn the capillary was a preform with five holes. Figure 8b, illustrates an example where the drawn capillary, which may also be referred to as a housing or tubular sleeve, comprises one illuminating optical fiber 120, one transparent capillary 110 and three collecting optical fibers 130', 130", 130‴. each provided in a respective one of said channels.

Figures 9a and 9b illustrate the case of one optical fiber 920 and one transparent capillary 910 both arranged in the same channel 950 of the drawn capillary 950. As an example, if the diameter of the fiber 920 and capillary 910 are each 125 µm, the inner opening diameter of the channel 950 is e.g. 253 µm, Fig 9a. Fig. 9b illustrates a possible arrangement that constrains two fibers (one illuminating optical fiber 920', and one collecting optical fiber 930') and one capillary 910 in a preferred position. One of the fibers is configured for emitting light in a direction transverse to the longitudinal extension of the sleeve or housing, and the other configured for receiving light in a direction transverse to the longitudinal extension of the sleeve or housing , i.e. one is configured for excitation and one is configured for collection of the light from the sample. The housing can also accommodate more fibers. For example, a housing with 5 holes, as illustrated in Fig. 8b, can be manufactured with conventional fiber fabrication technology, by drilling a glass preform and drawing, as mentioned above. The diameter of the resulting holes can be such that a tight fit is provided for the capillary and the illumination and collection fibers. For instance, the channels can have a diameter of 127 µm when the diameter of the fibers and capillary is 125 µm respectively. A short length section of the housing, e.g., 2 cm long, can be provided for the mounting of the fiber arrangement described here. The schematical cross section of the arrangement when four fibers and one capillary are inserted into the housing is illustrated in Fig. 8b.

## Claims

1. An optical fiber arrangement (100) comprising
- a transparent capillary (110) configured to be provided with a sample (101), which transparent capillary preferably has a rectangular or circular cross-section (111) which optionally has a diameter which is at most 5 mm and
- at least one illuminating optical fiber (120) configured for guiding optical radiation (10, 2) along a fiber axis within said optical fiber, which illuminating optical fiber is a single mode fiber for one wavelength range and is arranged alongside and adjacent to said transparent capillary (110), and
wherein said illuminating optical fiber (120) comprises an angled surface (121) for redirecting optical radiation (10) propagating along said fiber axis towards said transparent capillary (110) , wherein the surface normal (122) of said angled surface forms an acute angle relative the fiber axis, which acute axis is within the range of 30° to 60°, and most preferred within the range of 40° to 50°, wherein said illuminating optical fiber (120) is configured to illuminate a predetermined portion of said transparent capillary (110), and wherein said optical fiber arrangement further comprises one or more collecting optical fibers (130), each one of said collecting optical fibers being configured for receiving optical radiation from said predetermined portion of said transparent capillary and to redirect said optical radiation received from said predetermined portion of said transparent capillary along a fiber axis of said collecting optical fiber (130), wherein each one of said collecting optical fibers are arranged alongside and adjacent to said transparent capillary, wherein each one of said collecting optical fibers comprises an angled surface for redirecting said optical radiation.

2. An optical fiber arrangement according to claim 1, further comprising a tubular sleeve configured for securing said transparent capillary said at least one illuminating optical fiber and preferably also said one or more collecting optical fibers in a predetermined alignment relative each other, wherein said tubular sleeve optionally comprises a first channel wherein said transparent capillary is arranged, and a second channel having wherein said illuminating optical fiber is arranged.

3. An optical fiber arrangement according to claim 1, wherein said transparent capillary, said at least one illuminating optical fiber and preferably also said one or more collecting optical fibers are arranged in a housing, which housing is configured to receive and retain an index matching liquid.

4. An optical fiber arrangement according to any one of the preceding claims, wherein said at least one illuminating optical fiber further comprises a mirror provided on said angled surface, which reflective layer preferably comprises a material selected from a group comprising Al, Au, Ti, Ag and combinations of the same.

5. An optical fiber arrangement according to any one of the preceding claims, wherein each one of said fiber axis, a center axis of said transparent capillary and a surface normal to the center of said angled surface are arranged in the same plane, and wherein said angled surface is configured to redirect said optical radiation towards said center axis of the transparent capillary.

6. An optical fiber arrangement according to any one of the preceding claims, further comprising an optical radiation emitting device for emitting optical radiation within the wavelength range of UV, NIR and/or visible light, which optical radiation emitting device is configured for coupling optical radiation comprising at least one excitation wavelength into said illuminating optical fiber, which excitation wavelength is optionally within a wavelength range of 300 nm - 2500 nm.

7. An optical fiber arrangement according to claim 6, wherein each one of said at least one illuminating optical fiber is configured to guide at least one excitation wavelength, and said angled surface is configured to redirect said at least one excitation wavelength towards the sample, and wherein each one of said at least one collecting optical fiber is further configured to receive and transmit optical radiation scattered and/or emitted from the sample towards said angled surface, which angled surface is configured to redirect said scattered and or emitted optical radiation in a direction coinciding with said fiber axis, wherein emitted optical radiation optionally is fluorescence.

8. An optical fiber arrangement according to claim 7, wherein each one of said illumination optical fiber is single mode fiber or a few mode fiber with respect to said at least one excitation wavelength.

9. An optical fiber arrangement according to any one of the preceding claims, further comprising a photodetector configured for receiving optical radiation scattered and/or emitted from a sample in said capillary, thereafter transmitted through said at least collecting optical fiber towards said angled surface, thereafter redirected by said angled surface along said fiber axis and thereafter emitted from sad optical fiber towards said photodetector.

10. An optical fiber arrangement according to any one of the preceding claims, wherein said transparent capillary comprises an inlet and an outlet and wherein said optical fiber arrangement further comprises a flow arrangement comprising an upper sample reservoir in fluid connection with said inlet of said capillary, and a lower sample reservoir in fluid connection with said outlet of said capillary, which fluid connection allows a sample to flow from said upper sample reservoir to said lower sample reservoir via said transparent capillary, wherein said sample optionally comprises self-contained units of material and said capillary is preferably designed so as to allow said self-contained units of material to pass said capillary one after another.

11. An optical fiber arrangement according to claim 9 wherein said upper sample reservoir is configured to receive a sample comprising a medium being a liquid or a gas and a self-contained unit of material selected from a group comprising cells, bacteria, proteins, dust, or other moieties and combinations thereof,
and wherein said self-contained unit of material is transported by said medium from the inlet to the outlet of said transparent capillary.

12. An optical fiber arrangement according to claim 11 configured for flow cytometry and/or antibody detection.

13. An optical fiber arrangement according to any one of the preceding claims, wherein said illuminating optical fiber is a single mode fiber within one of the telecom windows and/or said optical fiber has a double-clad structure and/or wherein the numerical aperture of the outer core is > 0.12.

14. A method comprising the steps of:
- providing an optical fiber arrangement according to claim 1,
- providing a sample in said transparent capillary of said optical fiber arrangement;
- coupling at least one predetermined excitation wavelength into each one of said illuminating optical fibers of said optical fiber arrangement;
- redirecting said at least one predetermined excitation wavelength out of said illuminating optical fiber towards said sample,
- irradiating said sample with said at least one predetermined excitation wavelength,
- receiving at a first one of said one or more collecting optical fiber optical radiation scattered and/or emitted by said sample in response to said irradiation of said sample;
- transmitting a portion of said received optical radiation through said first optical fiber to said angled surface of said first optical fiber, which angled surface redirects a portion of said received optical radiation in a direction along said fiber axis of said first optical fiber;
- transmitting a portion of said received optical radiation from said optical fiber to a photodetector.

15. A method according to claim 14, wherein said sample comprises biological material selected from a group comprising cells, bacteria, proteins and combinations thereof.

## Patentansprüche

1. Lichtleitfaseranordnung (100), umfassend:
- eine transparente Kapillare (110), dafür ausgelegt, mit einer Probe (101) versorgt zu werden, wobei die transparente Kapillare bevorzugt einen rechteckigen oder kreisförmigen Querschnitt (111) aufweist, welcher optional einen Durchmesser aufweist, der höchstens 5 mm beträgt, und
- mindestens eine Beleuchtungslichtleitfaser (120), ausgelegt zum Leiten optischer Strahlung (10, 2) entlang einer Faserachse innerhalb der Lichtleitfaser, wobei die Beleuchtungslichtleitfaser eine Singlemodefaser für einen Wellenlängenbereich ist und neben der transparenten Kapillare (110) und an diese angrenzend angeordnet ist, und
wobei die Beleuchtungslichtleitfaser (120) eine angewinkelte Fläche (121) zum Umleiten optischer Strahlung (10), die sich entlang der Faserachse zu der transparenten Kapillare (110) hin fortpflanzt, umfasst, wobei die Flächennormale (122) der angewinkelten Fläche einen spitzen Winkel relativ zu der Faserachse bildet, wobei der spitze Winkel innerhalb des Bereichs von 30° bis 60° und ganz besonders bevorzugt innerhalb des Bereichs von 40° bis 50° liegt, wobei die Beleuchtungslichtleitfaser (120) ausgelegt ist zum Beleuchten eines vorbestimmten Anteils der transparenten Kapillare (110) und wobei die Lichtleitfaseranordnung ferner eine oder mehrere Sammellichtleitfasern (130) umfasst, wobei jede der Sammellichtleitfasern ausgelegt ist zum Empfangen optischer Strahlung von dem vorbestimmten Anteil der transparenten Kapillare und Umleiten der optischen Strahlung, die von dem vorbestimmten Anteil der transparenten Kapillare empfangen wurde, entlang einer Faserachse der Sammellichtleitfaser (130), wobei jede der Sammellichtleitfasern neben der transparenten Kapillare und an diese angrenzend angeordnet ist, wobei jede der Sammellichtleitfasern eine angewinkelte Fläche zum Umleiten der optischen Strahlung umfasst.

2. Lichtleitfaseranordnung nach Anspruch 1, ferner umfassend eine röhrenförmige Hülse, die ausgelegt ist zum Sichern der transparenten Kapillare, der mindestens einen Beleuchtungslichtleitfaser und bevorzugt der einen oder der mehreren Sammellichtleitfasern in einer vorbestimmten Ausrichtung relativ zueinander, wobei die röhrenförmige Hülse optional einen ersten Kanal, in dem die transparente Kapillare angeordnet ist, und einen zweiten Kanal, in dem die Beleuchtungslichtleitfaser angeordnet ist, umfasst.

3. Lichtleitfaseranordnung nach Anspruch 1, wobei die transparente Kapillare, die mindestens eine Beleuchtungslichtleitfaser und bevorzugt auch die eine oder die mehreren Sammellichtleitfasern in einem Gehäuse angeordnet sind, wobei das Gehäuse ausgelegt ist zum Aufnehmen und Rückhalten einer Immersionsflüssigkeit.

4. Lichtleitfaseranordnung nach einem der vorhergehenden Ansprüche, wobei die mindestens eine Beleuchtungslichtleitfaser ferner einen an der angewinkelten Fläche vorgesehenen Spiegel aufweist, wobei die reflektierende Schicht bevorzugt ein Material umfasst, das aus der aus Al, Au, Ti, Ag bestehenden Gruppe und Kombinationen derselben ausgewählt ist.

5. Lichtleitfaseranordnung nach einem der vorhergehenden Ansprüche, wobei jede aus der Faserachse, einer Mittelachse der transparenten Kapillare und einer Flächennormalen zu der Mitte der angewinkelten Fläche in derselben Ebene angeordnet sind, und wobei die angewinkelte Fläche ausgelegt ist zum Umleiten der optischen Strahlung zu der Mittelachse der transparenten Kapillare.

6. Lichtleitfaseranordnung nach einem der vorhergehenden Ansprüche, ferner umfassend eine optische Strahlung emittierende Vorrichtung zum Emittieren optischer Strahlung innerhalb des Wellenlängenbereichs von UV, NIR und/oder sichtbaren Lichts, wobei die optische Strahlung emittierende Vorrichtung ausgelegt ist zum Einkoppeln optischer Strahlung, die mindestens eine Anregungswellenlänge umfasst, in die Beleuchtungslichtleitfaser, wobei die Anregungswellenlänge optional innerhalb eines Wellenlängenbereichs von 300 nm - 2500 nm liegt.

7. Lichtleitfaseranordnung nach Anspruch 6, wobei jede der mindestens einen Beleuchtungslichtleitfasern ausgelegt ist zum Leiten von mindestens einer Anregungswellenlänge und die angewinkelte Fläche ausgelegt ist zum Umleiten der mindestens einen Anregungswellenlänge zu der Probe und, wobei jede aus der mindestens einen Sammellichtleitfaser ferner ausgelegt ist zum Empfangen und Übertragen optischer Strahlung, die von der Probe gestreut und/oder emittiert wurde, zu der angewinkelten Fläche, wobei die angewinkelte Fläche ausgelegt ist zum Umleiten der gestreuten oder emittierten optischen Strahlung in eine Richtung, die mit der Faserachse zusammenfällt, wobei emittierte optische Strahlung optional Fluoreszenz ist.

8. Lichtleitfaseranordnung nach Anspruch 7, wobei jede aus der Beleuchtungslichtleitfaser im Hinblick auf die mindestens eine Anregungswellenlänge eine Singlemodefaser oder eine Faser mit wenigen Moden ist.

9. Lichtleitfaseranordnung nach einem der vorhergehenden Ansprüche, ferner umfassend einen Fotodetektor, ausgelegt zum Empfangen optischer Strahlung, die von einer Probe in der Kapillare gestreut und/oder emittiert wurde, danach durch die mindestens eine Sammellichtleitfaser zu der angewinkelten Fläche übertragen wurde, danach durch die angewinkelte Fläche entlang der Faserachse umgeleitet wurde, und danach von der Lichtleitfaser zu dem Fotodetektor emittiert wurde.

10. Lichtleitfaseranordnung nach einem der vorhergehenden Ansprüche, wobei die transparente Kapillare einen Einlass und einen Auslass umfasst, wobei die Lichtleitfaseranordnung ferner eine Durchflussanordnung umfasst, umfassend ein oberes Probenreservoir, in fluidtechnischer Verbindung mit dem Einlass der Kapillare, und ein unteres Probenreservoir, in fluidtechnischer Verbindung mit dem Auslass der Kapillare, wobei die fluidtechnische Verbindung zulässt, dass eine Probe über die transparente Kapillare von dem oberen Probenreservoir zu dem unteren Probenreservoir fließt, wobei die Probe optional eigenständige Einheiten von Material umfasst und die Kapillare bevorzugt dafür ausgestaltet ist, dass zugelassen wird, dass die eigenständigen Einheiten von Material die Kapillare eine nach der anderen passieren.

11. Lichtleitfaseranordnung nach Anspruch 9, wobei das obere Probenreservoir ausgelegt ist zum Aufnehmen einer Probe, umfassend ein Medium, das eine Flüssigkeit oder ein Gas ist, und einer eigenständigen Einheit von Material, die ausgewählt ist aus einer Gruppe, die Zellen, Bakterien, Proteine, Staub oder andere Teile und Kombinationen davon umfasst,
und wobei die eigenständige Einheit von Material durch das Medium von dem Einlass zu dem Auslass der transparenten Kapillare transportiert wird.

12. Lichtleitfaseranordnung nach Anspruch 11, ausgestaltet für Durchflusszytometrie und/oder Antikörperdetektion.

13. Lichtleitfaseranordnung nach einem der vorhergehenden Ansprüche, wobei die Beleuchtungslichtleitfaser eine Singlemodefaser innerhalb eines der Telekommunikationsfenster ist und/oder die Lichtleitfaser eine Doppelmantelstruktur aufweist und/oder wobei die numerische Apertur des äußeren Kerns > 0,12 ist.

14. Verfahren, das die folgenden Schritte umfasst von:
- Bereitstellen einer Lichtleitfaseranordnung nach Anspruch 1,
- Bereitstellen einer Probe in der transparenten Kapillare der Lichtleitfaseranordnung;
- Einkoppeln mindestens einer vorbestimmten Anregungswellenlänge in jede aus den mehreren Beleuchtungslichtleitfasern der Lichtleitfaseranordnung;
- Umleiten der mindestens einen vorbestimmten Anregungswellenlänge aus der Beleuchtungslichtleitfaser zu der Probe,
- Bestrahlen der Probe mit der mindestens einen Anregungswellenlänge,
- Empfangen an einer der mindestens einen oder der mehreren Sammellichtleitfasern von optischer Strahlung, die als Antwort auf die Bestrahlung der Probe durch die Probe gestreut und/oder emittiert wurde;
- Übertragen eines Anteils der empfangenen optischen Strahlung durch die erste Lichtleitfaser zu der angewinkelten Fläche der ersten Lichtleitfaser, wobei die angewinkelte Fläche einen Anteil der empfangenen optischen Strahlung in einer Richtung entlang der Faserachse der ersten Lichtleitfaser umleitet;
- Übertragen eines Anteils der empfangenen optischen Strahlung von der Lichtleitfaser zu einem Fotodetektor.

15. Verfahren nach Anspruch 14, wobei die Probe biologisches Material umfasst, das ausgewählt ist aus einer Gruppe, die Zellen, Bakterien, Proteine und Kombinationen davon umfasst.

## Revendications

1. Agencement de fibres optiques (100) comprenant :
- un capillaire transparent (110) configuré de façon à être fourni avec un échantillon (101), lequel capillaire transparent a une section efficace rectangulaire ou circulaire (111) qui a facultativement un diamètre qui est au maximum 5 mm, et
- au moins une fibre optique d'éclairage (120) configurée de façon à guider un rayonnement optique (10, 2) le long d'un axe de fibre à l'intérieur de ladite fibre optique,
laquelle fibre optique d'éclairage est une fibre monomode pour une plage de longueurs d'onde et est disposée le long dudit capillaire transparent (110) et adjacente à celui-ci, et
ladite fibre optique d'éclairage (120) comportant une surface inclinée (121) pour rediriger le rayonnement optique (10) se propageant le long dudit axe de fibre vers ledit capillaire transparent (110), la surface normale (122) à ladite surface inclinée formant un ange aigu par rapport à l'axe de fibre, lequel axe aigu est situé dans la plage allant de 30° à 60°, et de préférence dans la plage allant de 40° à 50°,
ladite fibre optique d'éclairage (120) étant configurée de façon à éclairer une partie prédéterminée dudit capillaire transparent (110), et ledit agencement de fibres optiques comprenant en outre une ou plusieurs fibres optiques de collecte (130), chacune desdites fibres optiques de collecte étant configurée de façon à recevoir un rayonnement optique venant de ladite partie prédéterminée dudit capillaire transparent et de façon à rediriger ledit rayonnement optique reçu de ladite partie prédéterminée dudit capillaire transparent le long d'un axe de fibre de ladite fibre optique de collecte (130), chacune desdites fibres optiques de collecte étant disposée le long dudit capillaire transparent et étant adjacente à celui-ci,
chacune desdites fibres optiques de collecte comportant une surface inclinée pour rediriger ledit rayonnement optique.

2. Agencement de fibres optiques selon la revendication 1, comprenant en outre un manchon tubulaire configuré de façon à fixer ledit capillaire transparent, ladite au moins une fibre optique d'éclairage et aussi de préférence une ou plusieurs fibres optiques de collecte dans un alignement prédéterminé les uns par rapport aux autres, ledit manchon tubulaire comportant facultativement un premier canal dans lequel ledit capillaire transparent est disposé, et un deuxième canal dans lequel ladite fibre optique d'éclairage est disposée.

3. Agencement de fibres optiques selon la revendication 1, dans lequel ledit capillaire transparent, ladite au moins une fibre optique d'éclairage et aussi de préférence ladite ou lesdites fibres optiques de collecte sont disposés dans un logement, lequel logement est configuré de façon à recevoir et retenir un liquide adaptateur d'indice.

4. Agencement de fibres optiques selon l'une quelconque des revendications précédentes, dans lequel ladite au moins une fibre optique d'éclairage comporte un miroir prévu sur ladite surface inclinée, laquelle couche réfléchissante consistant de préférence en un matériau sélectionné parmi un groupe comprenant Al, Au, Ti, Ag et des combinaisons de ceux-ci.

5. Agencement de fibres optiques selon l'une quelconque des revendications précédentes, dans lequel chacun dudit axe de fibre, un axe central dudit capillaire transparent et une surface normale au centre de ladite surface inclinée sont disposés dans le même plan, et dans lequel ladite surface inclinée est configurée de façon à rediriger ledit rayonnement optique vers ledit axe central du capillaire transparent.

6. Agencement de fibres optiques selon l'une quelconque des revendications précédentes, comprenant en outre un dispositif émetteur de rayonnement optique pour émettre un rayonnement optique situé dans la plage de longueurs d'onde de la lumière ultraviolette, de la lumière infrarouge proche et/ou de la lumière visible, lequel dispositif émetteur de rayonnement optique étant configuré de façon à coupler un rayonnement optique comportant au moins une longueur d'onde d'excitation dans ladite fibre optique d'éclairage, laquelle longueur d'onde d'excitation est située facultativement dans une plage de longueurs d'onde allant de 300 nm à 2500 nm.

7. Agencement de fibres optiques selon la revendication 6, dans lequel chacune de ladite au moins une fibre optique d'éclairage est configurée de façon à guider au moins une longueur d'onde d'excitation, et ladite surface inclinée est configurée de façon à rediriger ladite au moins une longueur d'onde d'excitation vers l'échantillon, et dans lequel chacune de ladite au moins une fibre optique de collecte est configurée en outre de façon à recevoir et à transmettre un rayonnement optique diffusé et/ou émis depuis l'échantillon vers ladite surface inclinée, laquelle surface inclinée est configurée de façon à rediriger ledit rayonnement optique diffusé et/ou émis dans une direction coïncidant avec ledit axe de fibre, ledit rayonnement optique émis étant facultativement une fluorescence.

8. Agencement de fibres optiques selon la revendication 7, dans lequel chacune de ladite fibre optique d'éclairage est une fibre monomode ou une fibre à peu de modes par rapport à ladite au moins une longueur d'onde d'excitation.

9. Agencement de fibres optiques selon l'une quelconque des revendications précédentes, comprenant en outre un photodétecteur configuré de façon à recevoir un rayonnement optique diffusé et/ou émis depuis un échantillon dans ledit capillaire, transmis ensuite à travers ladite au moins une fibre optique de collecte vers ladite surface inclinée, redirigé ensuite par ladite surface inclinée le long dudit axe de fibre et émis ensuite depuis ladite fibre optique vers ledit photodétecteur.

10. Agencement de fibres optiques selon l'une quelconque des revendications précédentes, dans lequel ledit capillaire transparent comporte une entrée et une sortie et cet agencement de fibres optiques comprenant en outre un agencement d'écoulement comprenant un réservoir d'échantillon supérieur en connexion fluidique avec ladite entrée dudit capillaire, et un réservoir d'échantillon inférieur en connexion fluidique avec ladite sortie dudit capillaire, laquelle connexion fluidique permettant à un échantillon de s'écouler dudit réservoir d'échantillon supérieur audit réservoir d'échantillon inférieur via ledit capillaire transparent, ledit échantillon comprenant des unités autonomes de matériel biologique et ledit capillaire étant conçu de préférence afin de permettre auxdites unités autonomes de matériel biologique de passer dans ledit capillaire l'une après l'autre.

11. Agencement de fibres optiques selon la revendication 9, dans lequel ledit réservoir d'échantillon supérieur est configuré de façon à recevoir un échantillon comprenant un milieu étant un liquide ou un gaz et une unité autonome de matériel biologique sélectionné parmi un groupe comprenant des cellules, les bactéries, des protéines, de la poussière, ou d'autres fragments et combinaisons de ceux-ci, et dans lequel ladite unité autonome de matériel biologique est transportée par ledit milieu de l'entrée à la sortie dudit capillaire transparent.

12. Agencement de fibres optiques selon la revendication 11 configuré pour une cytométrie de flux et/ou pour une détection d'anticorps.

13. Agencement de fibres optiques selon l'une quelconque des revendications précédentes, dans lequel ladite fibre optique d'éclairage est une fibre monomode à l'intérieur d'une des fenêtres télécom et/ou ladite fibre optique a une structure à double gaine et/ou dans lequel l'ouverture numérique du cœur extérieur est > 0,12.

14. Procédé comprenant les étapes consistant à :
- fournir un agencement de fibres optiques selon la revendication 1 ;
- fournir un échantillon dans ledit capillaire transparent dudit agencement de fibres optiques ;
- coupler au moins une longueur d'onde d'excitation prédéterminée dans chacune desdites fibres optiques d'éclairage dudit agencement de fibres optiques ;
- rediriger ladite au moins une longueur d'onde d'excitation prédéterminée hors de ladite fibre optique d'éclairage vers ledit échantillon ;
- irradier ledit échantillon avec ladite au moins une longueur d'onde d'excitation prédéterminée ;
- recevoir un rayonnement optique d'une première desdites une ou plusieurs fibres optiques de collecte diffusé et/ou émis par ledit échantillon en réponse à ladite irradiation dudit échantillon ;
- transmettre une partie dudit rayonnement optique reçu à travers ladite première fibre optique à ladite surface inclinée de ladite première fibre optique, laquelle surface inclinée redirige une partie dudit rayonnement optique reçu dans une direction le long dudit axe de fibre de ladite première fibre optique ;
- transmettre une partie dudit rayonnement optique reçu de ladite fibre optique à un photodétecteur.

15. Procédé selon la revendication 14, dans lequel ledit échantillon consiste en un matériel biologique sélectionné parmi un groupe comprenant des cellules, des bactéries, des protéines et des combinaisons de celles-ci .
